# EUROPÄISCHE PATENTSCHRIFT

(11) **EP 2 428 396 B1**
(45) Veröffentlichungstag und Bekanntmachung des Hinweises auf die Patenterteilung: **17.07.2013**
(21) Anmeldenummer: 11180662.6
(22) Anmeldetag: 09.09.2011
(51) Int. Cl.: B60N 2/68

(54) **Verfahren zur Herstellung eines Rückenlehnenrahmenelements**
Method for producing a backrest frame element
Procédé de fabrication d'un élément de cadre de dossier

(30) Priorität: 10.09.2010 DE 102010040593
(43) Veröffentlichungstag der Anmeldung: 14.03.2012
(73) Patentinhaber: Johnson Controls GmbH, 51399 Burscheid (DE)
(72) Erfinder: Schlitt, Markus, 51491 Overath (DE)
(74) Vertreter: Liedtke, Markus

(56) Entgegenhaltungen:
- EP-A1- 2 072 328
- US-A- 5 671 976

## Beschreibung

Die Erfindung betrifft ein Verfahren zur Herstellung eines Rückenlehnenrahmenelements, ein Verfahren zur Herstellung eines Rückenlehnenrahmens und einen Rückenlehnenrahmen.

Aus dem Stand der Technik sind allgemein Rückenlehnenrahmen für Fahrzeugsitze bekannt, die dazu dienen, eine Polsterung der Rückenlehne zu tragen. Der Rückenlehnenrahmen ist üblicher Weise aus einem Metall und insbesondere aus einer Mehrzahl von Blechpressteilen gefertigt und gibt einer Rückenlehne des Fahrzeugsitzes die notwendige mechanische Stabilität. Insbesondere bei einem Unfall des Fahrzeugs muss die Rückenlehne des Fahrzeugsitzes hohen Beschleunigungskräften Stand halten können, um die Sicherheit eines auf dem Fahrzeugsitz befindlichen Fahrzeuginsassen sicherstellen zu können. Die Blechpressteile sind üblicher Weise zur Bildung des Rückenlehnenrahmens miteinander kraft-, form- und/oder stoffschlüssig verbunden und insbesondere verschweißt.

Aus der DE 100 42 850 A1 ist eine Rückenlehne für einen Kraftfahrzeugsitz bekannt, bei dem ein Rückenlehnenrahmen einen Rand aufweist, der aus ineinander übergehenden Teilstücken zusammengesetzt ist. Der Rand ist im Wesentlichen U-förmig ausgebildet und umfasst einen Toprand, einen rechten und einen linken Eckrand und einen rechten und linken Seitenrand.

Ein gattungsgemäßes Verfahren zur Herstellung eines im Wesentlichen U-förmigen Rückenlehnenrahmenelementes ist aus dem Dokument US-B5671976 bekannt.

Aufgabe der vorliegenden Erfindung ist es, ein verbessertes und automatisierbares Verfahren zur Herstellung eines Rückenlehnenrahmenelements anzugeben, bei dem Herstellungskosten eingespart sind, ohne die mechanische Stabilität eines das Rückenelementrahmenelement aufweisenden Rückenlehnenrahmens zu beeinträchtigen.

Die Aufgabe wird erfindungsgemäß mit einem Verfahren zur Herstellung eines Rückenlehnenrahmenelements mit den Merkmalen des Patentanspruchs 1, einem Verfahren zur Herstellung eines Rückenlehnenrahmens mit den Merkmalen des Patentanspruchs 6 und einem Rückenlehnenrahmen für einen Fahrzeugsitz mit den Merkmalen des Patentanspruchs 8 gelöst.

Vorteilhafte Ausgestaltungen der Erfindung sind Gegenstand der Unteransprüche.

Ein im Wesentlichen U-förmiges Rückenlehnenrahmenelement für einen Fahrzeugsitz umfasst ein erstes Seitenelement, ein zweites Seitenelement und ein das erste und zweite Seitenelement verbindendes unteres Verbindungselement. Erfindungsgemäß wird bei einem Verfahren zur Herstellung des Rückenlehnenrahmenelements, in einem ersten Verfahrensschritt, ein Blechzuschnitt zu einem ersten Profilteil umgeformt. Das erste Profilteil umfasst ein zu dem ersten Seitenelement korrespondierendes erstes Teilprofil und ein zu dem zweiten Seitenelement korrespondierendes zweites Teilprofil. In einem zweiten Verfahrensschritt wird das erste Profilteil ausgeschnitten. In einem dritten Verfahrensschritt werden das erste Teilprofil um eine erste Achse und das zweites Teilprofil um eine zweite Achse zu einem zweiten Profilteil umgebogen. In einem vierten Verfahrensschritt wird das zweite Profilteil zum Rückenlehnenrahmenelement umgeformt, in dem das untere Verbindungselement geformt wird.

Mit dem erfindungsgemäßen Verfahren ist erreicht, dass das strukturell komplexe Rückenlehnenrahmenelement mittels eines Umformverfahrens aus einem Stück herstellbar ist. Das hergestellte einstückige Rücklehnenrahmenelement weist somit eine erhöhte Festigkeit und mechanische Stabilität auf, wobei gleichzeitig Fertigungsschritte bei der Herstellung entfallen, die bei einer Herstellung des Rückenlehnenrahmenelements aus einer Vielzahl von Teilstücken notwendig sind. Somit sind Herstellungs- und Montagekosten eingespart.

Vorzugsweise wird bzw. werden der Blechzuschnitt und/oder das zweite Profilteil in einem Tiefziehverfahren umgeformt. Tiefziehverfahren sind leicht automatisierbar und sind somit zur wirtschaftlichen Fertigung von Massenprodukten, wie Rückenlehnenrahmen, besonders geeignet.

Einer bevorzugten Ausgestaltung der Erfindung zufolge wird das erste Teilprofil um etwa 90 Grad um die erste Achse umgebogen. Das zweite Teilprofil wird um etwa 90 Grad um die zweite Achse umgebogen. Das Umbiegen der Teilprofile ermöglicht eine Strukturierung des zu formenden Rückenlehnenrahmenelements in zwei zueinander orthogonalen Ebenen und damit die Herstellung des Rückenlehnenrahmenelements aus einem einzigen Stück.

Vorzugsweise verlaufen im Wesentlichen die erste Achse, die zweite Achse, das erste Seitenelement und das zweite Seitenelement parallel zueinander. Nach dem Umbiegen des ersten und des zweiten Seitenelements um die jeweilige erste oder zweite Achse verlaufen das erste und das zweite Seitenelement jeweils im Wesentlichen in zueinander parallel angeordneten Ebenen. Damit ist vorteilhafter Weise eine mechanisch besonders stabile Struktur für das Rückenrahmenelement gegeben.

Die erste Achse und die zweite Achse sind voneinander beabstandet. Ein Abstand zwischen der ersten und der zweiten Achse entspricht einer Breite des unteren Verbindungselements. Nach dem Umbiegen des ersten und des zweiten Seitenelements kann somit in dem das erste und zweite Seitenelement verbindenden Bereich das Verbindungselement in dem vierten Verfahrensschritt geformt werden.

Bei einem Verfahren zur Herstellung eines Rückenlehnenrahmens für einen Fahrzeugsitz wird ein oberes Verbindungselement mit dem Rückenlehnenrahmenelement form-, kraft- und/oder stoffschlüssig verbunden. Der so gefertigte umlaufende, geschlossene Rückenlehnenrahmen besteht im Wesentlichen nur aus zwei separaten Bauteilen, dem im Wesentlichen U-förmigen Rückenlehnenrahmenelement und dem stegartigen oberen Verbindungselement und kann daher schnell und kosteneffizient hergestellt werden.

Einer bevorzugten Ausbildung der Erfindung zufolge wird das obere Verbindungselement mittels einer Mehrzahl von Schweißpunkten oder Schweißnähten mit dem Rückenlehnenrahmenelement verbunden.

Ein so hergestellter Rückenlehnenrahmen für einen Fahrzeugsitz weist ein U-förmiges und einstückiges Rückenlehnenrahmenelement mit erhöhter Festigkeit auf. Insbesondere bei einem Heckaufprall ist der auf dem Fahrzeugsitz befindliche Fahrzeuginsasse durch die stabile Rückenlehne des Fahrzeugsitzes besonders geschützt und eine Verletzungsgefahr verringert.

Anhand der beigefügten schematischen Figuren wird die Erfindung näher erläutert.

Dabei zeigen:
- Figur 1: eine perspektivische Darstellung eines Rückenlehnenrahmenelements,
- Figur 2A bis 2D: schematisch ein Verfahren zur Herstellung eines Rückenlehnenrahmenelements,
- Figur 3: eine perspektivische Darstellung des Rückenlehnenrahmens.

Einander entsprechende Teile sind in allen Figuren mit den gleichen Bezugszeichen versehen.

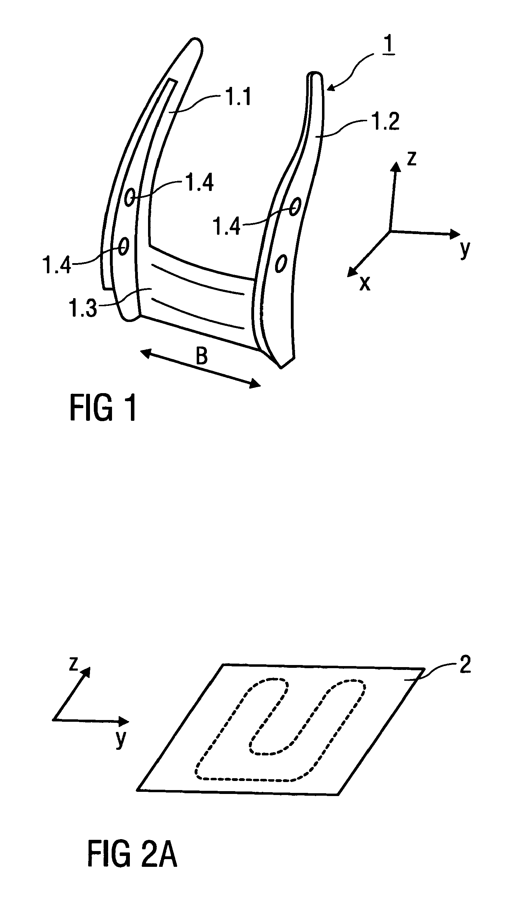

Figur 1 zeigt eine perspektivische Darstellung des im Wesentlichen U-förmigen Rückenlehnenrahmenelements 1, das ein erstes Seitenelement 1.1, ein zweites Seitenelement 1.2 und ein dazwischen angeordnetes unteres Verbindungselement 1.3 umfasst. Das erste und das zweite Seitenelement 1.1, 1.2 sind gegenüberliegend angeordnet und verlaufen jeweils im Wesentlichen in einer jeweiligen Ebene, die parallel zu einer xz-Ebene verläuft. Die xz-Ebene ist von einer x-Achse X und einer dazu orthogonalen z-Achse Z aufgespannt.

Das zwischen erstem und zweitem Seitenelement 1.1, 1.2 angeordnete untere Verbindungselement 1.3 weist eine Breite B auf und verläuft im Wesentlichen parallel zu einer yz-Ebene, die von einer y-Achse Y und der z-Achse Z aufgespannt ist. Somit ist das untere Verbindungselement 1.3 im Wesentlichen senkrecht zum ersten Seitenelement 1.1 und zum zweiten Seitenelement 1.2 angeordnet.

Insbesondere bei einer Installation des Rückenlehnenrahmenelements 1 in einer Rückenlehne eines Fahrzeugsitzes ist die x-Achse X typischer Weise parallel zur Fahrtrichtung, die y-Achse Y typischer Weise parallel zu einer Nickachse und die z-Achse Z typischer Weise parallel zu einer Hochachse des Fahrzeugs ausgerichtet.

Das erste Seitenelement 1.1, das zweite Seitenelement 1.2 und das untere Verbindungselement 1.3 können Materialaussparungen 1.4 zur Gewichtsreduktion aufweisen.

Alternativ oder zusätzlich dazu dienen die Materialaussparungen 1.4 der Befestigung von zusätzlichen Bauteilen, wie beispielsweise dem Einhängen von Federelementen einer Lordosenstütze oder dem Montieren eines Verstellhebels bzw. eines Verstellgestänges für die Lordosenstütze.

Figuren 2A bis 2D illustrieren schematisch ein Verfahren zur Herstellung des Rückenlehnenrahmenelements 1.

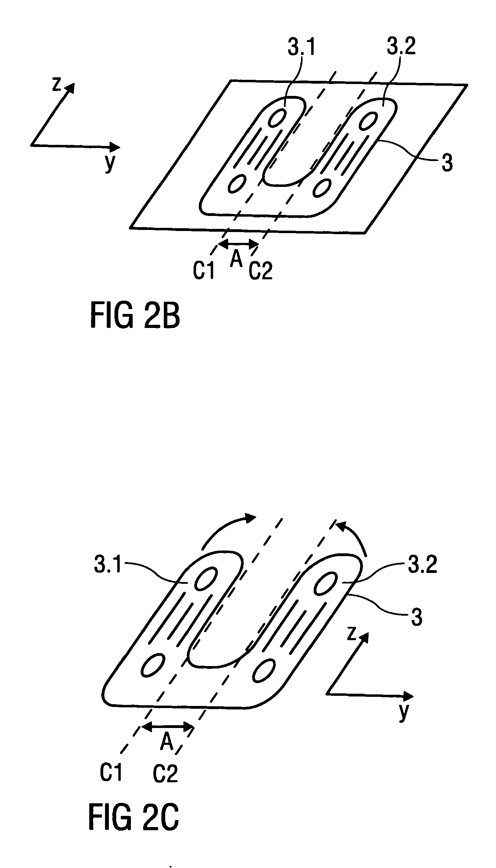

Figuren 2A und 2B zeigen schematisch einen ersten Verfahrensschritt des erfindungsgemäßen Verfahrens. Ein auch Platine genannter Blechzuschnitt 2 wird in einer Presse mittels eines Tiefziehverfahrens zu einem ersten Profilteil 3 umgeformt.

Dabei können typischer Weise Formwerkzeuge, wie Stempel und Ziehring, zum Einsatz kommen. Insbesondere kann in der Presse der Blechzuschnitt 2 von dem Stempel durch den Ziehring zur Formgebung des Blechzuschnitts 2 hindurchgedrückt werden.

Das erste Profilteil 3 weist ein zum ersten Seitenelement 1.1 korrespondierendes erstes Teilprofil 3.1 und ein zum zweiten Seitenelement 1.2 korrespondierendes zweites Teilprofil 3.2 auf. Dabei sind das erstes Teilprofil 3.1 und das zweites Teilprofil 3.2 voneinander beabstandet, wobei ein Abstand A der Breite B des unteren Verbindungselements 1.3 entspricht. Im ersten Verfahrensschritt werden im Wesentlichen die Struktur des ersten und zweiten Seitenelements 1.1, 1.2 geformt, wobei die Struktur des unteren Verbindungselements 1.3 im Wesentlichen in einem nachfolgendem Verfahrensschritt mittels einer weiteren Umformung geformt wird.

Das im Wesentlichen plane und U-förmige erste Profilteil 3 wird in einem zweiten Verfahrensschritt ausgeschnitten.

Anschließend wird in einem in Figur 2C gezeigten dritten Verfahrensschritt das erste Teilprofil 3.1 um eine erste Achse C1 und das zweite Teilprofil 3.2 um eine zweite Achse C2 zur Bildung eines zweiten Profilteils 4 um jeweils etwa 90 Grad umgebogen, wie von den Pfeilen in Figur 2C angedeutet. Dabei werden die parallel zur xz-Ebene ausgerichteten ersten und zweiten Seitenelemente 1.1, 1.2 geformt.

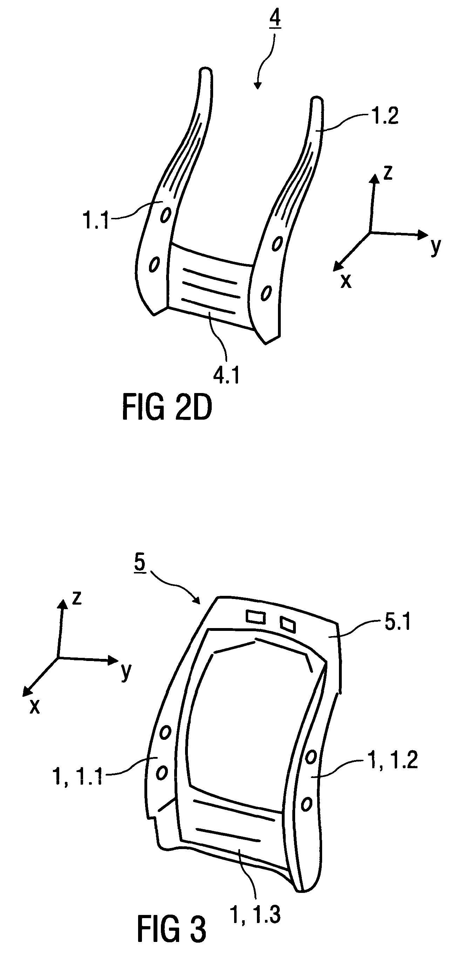

Figur 2D zeigt schematisch das zweite Profilteil 4 mit den bereits korrekt ausgebildeten und ausgerichteten ersten und zweiten Seitenelementen 1.1, 1.2. In einem vierten Verfahrensschritt 4 wird das zweite Profilteil 4 zum U-förmigen Rückenlehnenrahmenelement 1 mittels eines Tiefziehverfahrens umgeformt und fertig gestellt. Dabei wird das untere Verbindungselement 1.3 in einem zwischen ersten und zweiten Seitenelement 1.1, 1.2 liegenden Zwischenbereich 4.1 geformt. Die erste Achse C1 und die zweite Achse C2 verlaufen parallel zueinander und parallel zur z-Achse Z

Figur 3 zeigt einen umlaufenden Rückenlehnenrahmen 5, der das einstückige und U-förmige Rückenlehenrahmenelement 1 und ein oberes Verbindungselement 5.1 umfasst. Das obere Verbindungselement 5.1 ist mit dem ersten und zweiten Seitenelement 1.1, 1.2 des Rückenlehenrahmenelement 1 mittels einer Schweißverbindung stoffschlüssig verbunden.

Alternativ dazu kann das obere Verbindungselement 5.1 mittels einer kraft- und/oder formschlüssigen Verbindung, beispielsweise mittels Nieten, verbunden sein.

Zur Herstellung eines Rückenlehnenrahmens 5 wird das obere Verbindungselement 5.1 mit dem ersten und zweiten Seitenelement 1.1, 1.2 des Rückenlehnenrahmenelements 1 verschweißt. Zur stoffschlüssigen Verbindung von oberen Verbindungselement 5.1 und Rückenlehnenrahmenelement 1 wird eine Mehrzahl von Schweißpunkten oder Schweißnähten gebildet.

**Bezugszeichenliste**

| | |
|---|---|
| 1 | Rückenlehnenrahmenelement |
| 1.1 | erstes Seitenelement |
| 1.2 | zweites Seitenelement |
| 1.3 | unteres Verbindungselement |
| 1.4 | Materialaussparungen |
| 2 | Blechzuschnitt |
| 3 | erstes Profilteil |
| 3.1 | erstes Teilprofil |
| 3.2 | zweites Teilprofil |
| 4 | zweites Profilteil |
| 4.1 | Zwischenbereich |
| 5 | Rückenlehnenrahmen |
| 5.1 | oberes Verbindungselement |
| X | x-Achse |
| Y | y-Achse |
| Z | z-Achse |
| A | Abstand |
| B | Breite des unteren Verbindungselements |
| C1 | erste Achse |
| C2 | zweite Achse |

## Patentansprüche

1. Verfahren zur Herstellung eines im Wesentlichen U-förmigen Rückenlehnenrahmenelements (1) für einen Fahrzeugsitz, welches ein erstes Seitenelement (1.1), ein zweites Seitenelement (1.2) und ein diese verbindendes unteres Verbindungselement (1.3) umfasst, wobei in einem ersten Verfahrensschritt ein Blechzuschnitt (2) zu einem ersten Profilteil (3) umgeformt wird, **dadurch gekennzeichnet, dass** dieses ein zu dem ersten Seitenelement (1.1) korrespondierendes erstes Teilprofil (3.1) und ein zu dem zweiten Seitenelement (1.2) korrespondierendes zweites Teilprofil (3.2) umfasst, in einem zweiten Verfahrensschritt das erste Profilteil (3) ausgeschnitten wird, in einem dritten Verfahrensschritt das erste Teilprofil (3.1) um eine erste Achse (C1) und das zweite Teilprofil (3.2) um eine zweite Achse (C2) zu einem zweiten Profilteil (4) umgebogen werden und in einem vierten Verfahrensschritt das zweite Profilteil (4) zum Rückenlehnenrahmenelement (1) umgeformt wird, in dem das untere Verbindungselement (1.3) geformt wird.

2. Verfahren nach Anspruch 1,
**dadurch gekennzeichnet, dass** der Blechzuschnitt (2) und/oder das zweite Profilteil (4) in einem Tiefziehverfahren umgeformt werden bzw. wird.

3. Verfahren nach Anspruch 1 oder 2,
**dadurch gekennzeichnet, dass** das erste Teilprofil (3.1) um etwa 90 Grad um die erste Achse (C1) umgebogen wird und das zweite Teilprofil (3.2) um etwa 90 Grad um die zweite Achse (C2) umgebogen wird.

4. Verfahren nach einem der vorherigen Ansprüchen,
**dadurch gekennzeichnet, dass** im Wesentlichen die erste Achse (C1), die zweite Achse (C2), das erste Seitenelement (1.1) und das zweite Seitenelement (1.2) parallel zueinander verlaufen.

5. Verfahren nach einem der vorherigen Ansprüchen,
**dadurch gekennzeichnet, dass** die erste Achse (C1) und die zweite Achse (C2) voneinander beabstandet sind und ein Abstand (A) zwischen der ersten und der zweiten Achse (C1, C2) einer Breite (B) des unteren Verbindungselements (1.3) entspricht.

6. Verfahren zur Herstellung eines Rückenlehnenrahmens (5) für einen Fahrzeugsitz,
**dadurch gekennzeichnet, dass** ein oberes Verbindungselement (5.1) mit einem mittels eines Verfahrens nach einem der Ansprüche 1 bis 5 hergestellten Rückenlehnenrahmenelement (1) form-, kraft- und/oder stoffschlüssig verbunden wird.

7. Verfahren nach Anspruch 6,
**dadurch gekennzeichnet, dass** das obere Verbindungselement (5.1) mittels einer Mehrzahl von Schweißpunkten oder Schweißnähten mit dem Rückenlehnenrahmenelement (1) verbunden wird.

8. Rückenlehnenrahmen (5) für einen Fahrzeugsitz, hergestellt mittels eines Verfahrens nach Anspruch 6 oder 7.

## Claims

1. A method for manufacturing an essentially U-shaped seat-back frame element (1) for a vehicle seat which comprises a first side element (1.1), a second side element (1.2) and a lower connecting element (1.3) connecting these, wherein in a first processing step, a sheet-metal blank (2) is formed into a first shape (3), **characterized in that** the first shape (3) comprises a first partial profile (3.1) corresponding to the first side element (1.1) and a second partial profile (3.2) corresponding to the second side element (1.2), the first shape (3) is cut out in a second processing step, the first partial profile (3.1) is bent around a first axis (C1) and the second partial profile (3.2) is bent around a second axis (C2) to a second shape (4) in a third processing step, and in a fourth processing step the second shape (4) is formed to a seat-back frame element (1) in which the lower connecting element (1.3) is formed.

2. The method as claimed in claim 1, **characterized in that** the sheet-metal blank (2) and/or the second shape (4) is or, correspondingly, are formed in a deep-drawing procedure.

3. The method as claimed in claims 1 or 2, **characterized in that** the first partial profile (3.1) is bent by approximately 90 degrees around the first axis (C1) and the second partial profile (3.2) is bend by approximately 90 degrees around the second axis (C2).

4. The method as claimed in any preceding claim, **characterized in that** essentially the first axis (C1), the second axis (C2), the first side element (1.1) and the second side element (1.2) run in parallel to one another.

5. The method as claimed in any preceding claim, **characterized in that** the first axis (C1) and the second axis (C2) are spaced from one another and **in that** a distance (A) between the first and the second axes (C1, C2) corresponds to a width (B) of the lower connecting element (1.3).

6. The method for manufacturing a seat-back frame (5) for a vehicle seat, **characterized in that** an upper connecting element (5.1) is connected by positive locking, force locking and/or by adhesive bonding to a seat-back frame element (1) manufactured using a method as claimed in any claim 1 through 5.

7. The method as claimed in claim 6, **characterized in that** the upper connecting element (5.1) is connected to the seat-back frame element (1) using a plurality of spot welds or welded seams.

8. Seat-back frame (5) for a vehicle seat manufactured using a method as claimed in any claim 6 or 7.

## Revendications

1. Procédé de fabrication d'un élément de cadre de dossier (1) sensiblement en forme de U pour un siège de véhicule, comprenant un premier élément latéral (1.1), un deuxième élément latéral (1.2) et un élément de connexion inférieur (1.3) raccordant ceux-ci, une découpe de tôle (2) étant déformée pour obtenir une première pièce profilée (3) lors d'une première étape de procédé, **caractérisé en ce que** celle-ci comprend une première partie de profilé (3.1) correspondant au premier élément latéral (1.1) et une deuxième partie de profilé (3.2) correspondant au deuxième élément latéral (1.2), la première pièce profilée (3) est découpée lors d'une deuxième étape de procédé, la première partie de profilé (3.1) est pliée autour d'un premier axe (C1) et la deuxième partie de profilé (3.2) autour d'un deuxième axe (C2) pour obtenir une deuxième pièce profilée (4) lors d'une troisième étape de procédé, et la deuxième pièce profilée (4) est déformée pour obtenir l'élément de cadre de dossier (1) où l'élément de connexion inférieur (1.3) est formé lors d'une quatrième étape de procédé.

2. Procédé selon la revendication 1, **caractérisé en ce que** la découpe de tôle (2) et/ou la deuxième pièce profilée (4) sont déformée par emboutissage.

3. Procédé selon la revendication 1 ou la revendication 2, **caractérisé en ce que** la première partie de profilé (3.1) est pliée autour du premier axe (C1) de 90 degrés environ et la deuxième partie de profilé (3.2) autour du deuxième axe (C2) de 90 degrés environ.

4. Procédé selon l'une des revendications précédentes, **caractérisé en ce que** le premier axe (C1), le deuxième axe (C2), le premier élément latéral (1.1) et le deuxième élément latéral (1.2) s'étendent sensiblement parallèlement entre eux.

5. Procédé selon l'une des revendications précédentes, **caractérisé en ce que** le premier axe (C1) et le deuxième axe (C2) sont espacés l'un de l'autre et **en ce qu'**un intervalle (A) entre le premier et le deuxième axe (C1, C2) correspond à une largeur (B) de l'élément de connexion inférieur (1.3).

6. Procédé de fabrication d'un cadre de dossier (5) pour un siège de véhicule, **caractérisé en ce qu'**un élément de connexion supérieur (5.1) est raccordé par correspondance de forme, par adhérence et/ou par apport de matière à un élément de cadre de dossier (1) fabriqué au moyen d'un procédé selon l'une des revendications 1 à 5.

7. Procédé selon la revendication 6, **caractérisé en ce que** l'élément de connexion supérieur (5.1) est raccordé à l'élément de cadre de dossier (1) au moyen d'une pluralité de points de soudure ou de cordons de soudure.

8. Cadre de dossier (5) pour un siège de véhicule, fabriqué au moyen d'un procédé selon la revendication 6 ou la revendication 7.
